# EUROPEAN PATENT SPECIFICATION

(11) **EP 0 395 259 B1**
(45) Date of publication and mention of the grant of the patent: **25.01.1995**
(21) Application number: 90303931.1
(22) Date of filing: 11.04.1990
(51) Int. Cl.: G05D 23/24, H01S 3/043

(54) **Temperature control system for solid state light source**
Temperatursteuerungssystem für Festkörperlichtquellen
Régulation de temperature pour source lumineuse à l'état solide

(30) Priority: 27.04.1989 GB 8909669
(43) Date of publication of application: 31.10.1990
(73) Proprietor: NORTHERN TELECOM LIMITED, Montreal, Quebec H2Y 3Y4 (CA)
(72) Inventor: Visocchi, Pasqualino Michele, Enfield, Middlesex EN1 1PX (GB)
(74) Representative: Ryan, John Peter William

(56) References cited:
- EP-A- 0 013 584
- DE-A- 2 844 805
- ELEKTRONIK.vol. 36, no. 14, 10 July 1987,-MUNCHEN DE pages 82 - 84; GERHARD MEYER: 'temperaturstabilisierung mit peltier-element'
- PATENT ABSTRACTS OF JAPAN vol. 7, no. 272 (E-214)(1417) 3December 1983 & JP-A-58 153 387 ( TOKYO SHIBAURA DENKI K.K. ) 12 September 1983
- PATENT ABSTRACTS OF JAPAN vol. 7, no. 84 (E-169)(1229) 8April 1983 & JP-A-58 010 845 ( OKI DENKI KOGYO K.K. ) 21 January 1983

## Description

This invention relates to a temperature control system e.g. for a solid state laser or light emitting diode (LED) in a fibre optic transmission system.

Fibre optic transmission systems are finding increasing use in the communications and data transmission fields. A key component of such a system is the light source which comprises a solid state laser or, in some applications, a high power light emitting diode. The light source generates light of a single frequency for transmission via an optical fibre path to a remote receiver. Information is imparted to the optical carrier by corresponding modulation of the light source.

It is necessary in such a system to ensure that the wavelength of the light source remains constant. To achieve this it has been found necessary to maintain the light source at a constant temperature. Conventionally this is achieved by placing the light source in thermal contact with a Peltier effect device commonly referred to as a heat pump. This device comprises two dissimilar electrically conductive materials placed in contact. Passage of an electric current in one direction through the junction between the materials causes cooling of the junction region, whilst passage of a current in the opposite direction causes heating. Conventional control circuits for use with Peltier effect devices generally comprise unidirectional amplifiers which provide cooling only, and thus provide only a limited temperature control. A further form of temperature control is described in specification No. US-A1-4571728. This arrangement in which the Peltier element is supplied with current from a single polarity power source via bridging amplifier controlled by temperature sensitive resistor. The bridging amplifier determines the direction of the current through the Peltier element.

The use of a Peltier effect device to effect heating and cooling is discussed by G Meyer in Elektronik, Vol.36 No. 14, 10 July 1987, pages 82-84. The use of selectively enabled operational amplifiers to control temperature using a Peltier effect device is discussed in specification No. DE-A-2 844 805.

The object of the invention is to provide an accurate low-cost temperature control arrangement.

According to the invention there is provided a temperature control circuit for a Peltier effect device (heat pump), including first and second operational amplifiers (OPAMP 1, OPAMP 2) each having an inverting and a non-inverting input, a temperature responsive voltage source (thermistor RT1) thermally coupled to the Peltier effect device and electrically connected to the non-inverting input of the first operational amplifier and to the inverting input of the second operational amplifier, and potential dividers (R3, R4, R15, R16) coupled to the other inputs of said operational amplifiers, the circuit being so arranged that, deviation of the temperature of the heat pump device from a predetermined controlled temperature causes one or the other of the operational amplifiers to be selectively enabled to draw current through the heat pump device in an appropriate direction to effect cooling or heating of the device towards said predetermined temperature, characterised in that current through the Peltier effect device in one direction is controlled via first and second field effect transistors (TR1, TR2) arranged as a non- inverting amplifier, and that current through the Peltier effect device in the other direction is controlled via third and fourth field effect transistors (TR3, TR4) arranged as an inverting amplifier.

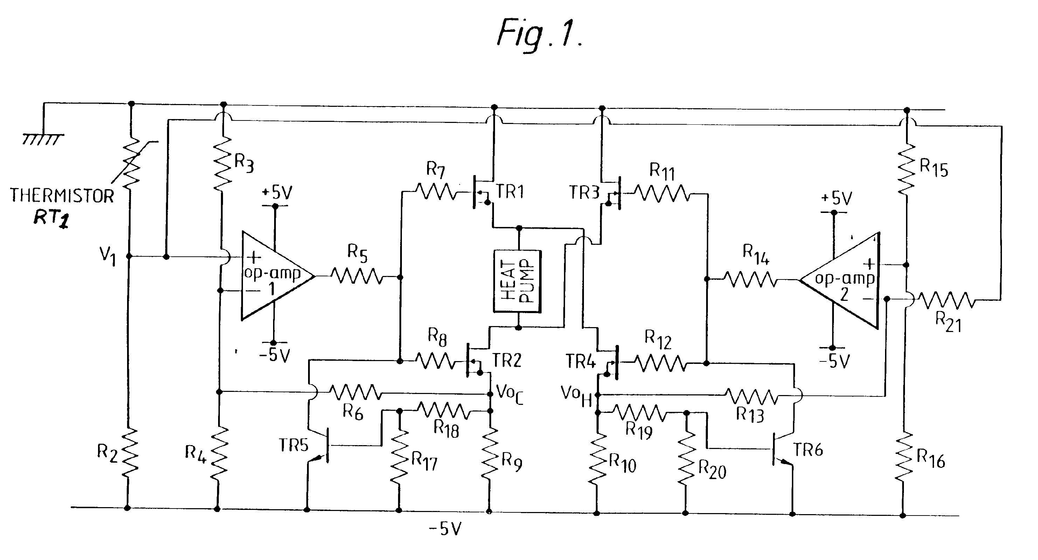

An embodiment of the invention will now be described with reference to the accompanying drawings in which the single Figure represents a bidirectional transconductance amplifier for providing temperature control of a Peltier effect device or heat pump.

Referring to the drawing, the temperature control amplifier circuit includes first and second operational amplifiers OPAMP 1 and OPAMP 2 each operational in a non-linear mode and each responsive to the resistance value of a thermistor RT1. As shown in the drawing the Peltier effect device or heat pump on which, in use, a solid state light source is mounted is connected in a parallel cascade combination with field effect transistors TR1, TR2, TR3 and TR4. Passage of electric current through the heat pump in one direction to effect cooling is performed by OPAMP 1 together with transistors TR1 and TR2 configured as a non-inverting amplifier, whilst passage of current through the heat pump in the other direction to effect heating is performed by OPAMP 2 together with transistor TR3 and TR4 configured in an inverting amplifier. Thermistor RT1 and resistor R2 coupled between the circuit negative and ground supply rails form a temperature dependent voltage source where output V1 is fed to the non-inverting input OPAMP 1 and the inverting input of OPAMP 2. The remaining input of the operational amplifiers are coupled each to a fixed voltage source provided by potential dividers R3, R4 and R15, R16 respectively. In this arrangement the thermistor RT1 is a negative temperature co-efficient device and is mounted in thermal contact with the heat pump.

The resistance values of the three potential dividers RT1, R2; R3, R4 and R15, R16 are such that at a predetermined ambient temperature, e.g. 25°C, the output conditions of the two amplifiers OPAMP 1 and OPAMP 2 are such that the transistors TR1, TR2, TR3 and TR4 are turned off providing output voltage Voc and Voh substantially equal to the negative supply voltage at the source terminals of transistors TR2 and TR4 respectively. The resistors R6 and R13 provide an internal feedback function.

If the temperature of the heat pump now rises above this ambient temperature, the voltage V1 applied to the non-inverting input of OPAMP 1 and the inverting input of OPAMP 2 rises. This causes the voltage applied to the gates of transistors TR1, TR2 to rise turning these transistors on and causing the voltage Voc at the source of transistor TR2 to rise. Current is drawn through the heat pump producing a cooling effect. At the same time transistors TR3 and TR4 are turned hard off thus disabling the heating portion of the circuit. The open loop gain of the cooling portion of the circuit is determined by resistors R3, R4, R6 and R9 whilst negative feedback is achieved by thermal resistance between the thermistor RT1 and the heat pump.

Similarly, if the temperature of the heat pump falls below the ambient temperature, transistors TR3 and TR4 are turned on and transistors TR1 and TR2 are turned hard off. This causes Voc to fall substantially to the negative rail voltage and causes Voh to rise drawing a heating current through the heat pump. The open loop gain of the heating portion of the circuit is determined by resistors R10, R13, R15 and R21. Negative feedback is provided as described above.

The bidirectional action of the circuit is achieved by utilising the inherent non-linear regions of OPAMP 1 and OPAMP 2 allowing the heating and cooling actions to be performed independently from a common input temperature signal.

Advantageously, the current drawn through the heat pump is limited to a predetermined maximum value. This is achieved in the cooling mode by bipolar transistor TR5 and resistors R17 and R18. In the heating mode current limiting is achieved by bipolar transistor TR6 and resistors R19 and R20. When the current through the heat pump and thus through R9 (R10) reaches a predetermined threshold, the potential difference across R17 (R20) turns on the transistor TR5 (TR6) thus lowering the gate voltage of field effect transistors TR1 and TR2 (TR3 and TR4) and thereby reducing the current flow.

## Claims

1. a temperature control circuit for a Peltier effect device (heat pump), including first and second operational amplifiers (OPAMP 1, OPAMP 2) each having an inverting and a non-inverting input, a temperature-responsive voltage source (thermistor RT1) thermally coupled to the Peltier effect device and electrically connected to the non-inverting input of the first operational amplifier and to the inverting input of the second operational amplifier, and potential dividers (R3, R4, R15, R16) coupled to the other inputs of said operational amplifiers, the circuit being so arranged that, deviation of the temperature of the Peltier effect device (heat pump) from a predetermined controlled temperature causes one or the other of the operational amplifiers to be selectively enabled to draw current through the Peltier effect device (heat pump) in an appropriate direction to effect cooling or heating of the device towards said predetermined temperature, characterised in that current through the Peltier effect device in one direction is controlled via first and second field effect transistors (TR1, TR2) arranged as a non- inverting amplifier, and that current through the Peltier effect device in the other direction is controlled via third and fourth field effect transistors (TR3, TR4) arranged as an inverting amplifier.

2. A temperature control circuit as claimed in claim 1 or 2, characterised in that the current drawn through the Peltier effect device (heat pump) is limited to a maximum value.

3. A temperature control circuit as claimed in claim 3, characterised in that said current limiting means comprises first and second bipolar transistors (TR5, TR6).

4. An optical transmitter provided with a temperature control circuit as claimed in any one of claims 1 to 3.

## Patentansprüche

1. Temperaturregelschaltung für ein Peltiereffekt-Bauteil (Wärmepumpe), die erste und zweite Operationsverstärker (OPAMP1, OPAMP2), die jeweils einen invertierenden und einen nichtinvertierenden Eingang aufweisen, eine temperaturabhängige Spannungsquelle (Thermistor RT1), die thermisch mit dem Peltiereffekt-Bauteil gekoppelt und elektrisch mit dem nichtinvertierenden Eingang des ersten Operationsverstärkers und mit dem invertierenden Eingang des zweiten Operationsverstärkers verbunden ist, und Potentialteiler (R3, R4, R15, R16) einschließt, die mit den anderen Eingängen der Operatinsverstärker gekoppelt sind, wobei die Schaltung derart ausgebildet ist, daß eine Abweichung der Temperatur des Peltiereffekt-Bauteils (Wärmepumpe) von einer vorgegebenen Regeltemperatur bewirkt, daß der eine oder der andere der Operationsverstärker selektiv aktiviert wird, um einen Strom durch das Peltiereffekt-Bauteil (Wärmepumpe) in einer geeigneten Richtung zu ziehen, um eine Kühlung oder Erwärmung des Bauteils in Richtung auf die vorgegebene Temperatur zu erzielen,
dadurch gekennzeichnet, daß der Strom durch das Peltiereffekt-Bauteil in der einen Richtung über erste und zweite Feldeffekttransistoren (TR1, TR2) geregelt wird, die als nichtinvertierender Verstärker angeordnet sind, und das der Strom durch das Peltiereffekt-Bauteil in der anderen Richtung über dritte und vierte Feldeffekttransistoren (TR3, TR4) geregelt wird, die als invertierender Verstärker angeordnet sind.

2. Temperaturregelschaltung nach Anspruch 1 oder 2, dadurch gekennzeichnet, daß der durch das Peltiereffekt-Bauteil (Wärmepumpe) gezogene Strom auf einen Maximalwert begrenzt ist.

3. Temperaturregelschaltung nach Anspruch 3, dadurch gekennzeichnet, daß die Strombegrenzungseinrichtungen erste und zweite bipolare Transistoren (TR5, TR6) umfassen.

4. Lichtsender, der mit einer Temperaturregelschaltung nach einem der Ansprüche 1 bis 3 versehen ist.

## Revendications

1. Circuit de réglage de température destiné à un dispositif à effet Peltier (pompe à chaleur), comprenant un premier et un second amplificateur opérationnel (OPAMP 1, OPAMP 2) ayant chacun une entrée d'inversion et une entrée de non-inversion, une source de tension sensible à la température (thermistance TR1) couplée thermiquement au dispositif à effet Peltier et connectée électriquement à l'entrée de non-inversion du premier amplificateur opérationnel et à l'entrée d'inversion du second amplificateur opérationnel, et des diviseurs de potentiel (R3, R4, R15, R16) couplés aux autres entrées des amplificateurs opérationnels, le circuit étant disposé de manière qu'un écart de la température du dispositif à effet Peltier (pompe à chaleur) par rapport à une température réglée prédéterminée provoque l'autorisation sélective de la circulation du courant par l'un ou l'autre des amplificateurs opérationnels dans le dispositif à effet Peltier (pompe à chaleur) dans un sens convenable assurant le refroidissement ou le chauffage du dispositif vers la température prédéterminée, caractérisé en ce que le courant dans le dispositif à effet Peltier dans un premier sens est réglé par l'intermédiaire d'un premier et d'un second transistor à effet de champ (TR1, TR2) disposés sous forme d'un amplificateur non-inverseur, et en ce que le courant circulant dans le dispositif à effet Peltier dans l'autre sens est réglé par l'intermédiaire d'un troisième et d'un quatrième transistor à effet de champ (TR3, TR4) disposés sous forme d'un amplificateur inverseur.

2. Circuit de réglage de température selon la revendication 1 ou 2, caractérisé en ce que le courant circulant dans le dispositif à effet Peltier (pompe à chaleur) est limité à une valeur maximale.

3. Circuit de réglage de courant selon la revendication 3, caractérisé en ce que le dispositif de limitation de courant comprend un premier et un second transistor bipolaire (TR5, TR6).

4. Emetteur optique ayant un circuit de réglage de température selon l'une quelconque des revendications 1 à 3.
